# EUROPÄISCHE PATENTANMELDUNG

(11) **EP 0 794 342 A1**
(43) Veröffentlichungstag der Anmeldung: **10.09.1997**
(21) Anmeldenummer: 97102633.1
(22) Anmeldetag: 19.02.1997
(51) Int. Cl.: F16C 19/55, C23C 2/00, F16C 13/02

(54) **Wälzlager für Rollen**

(30) Priorität: 06.03.1996 DE 19608672
(71) Anmelder: SKF GMBH, D-97421 Schweinfurt (DE); Thyssen Stahl Aktiengesellschaft, 47166 Duisburg (DE)
(72) Erfinder: Biendara, Dieter, 57413 Finnentrop (DE); Braszus, Torsten, 97464 Niederwerrn (DE); Heeg, Thoralf, 57439 Attendorn (DE); Heiler, Hans-Joachim, 47447 Moers-Vinn (DE); Kaschube, Karl-Friedrich, 97464 Niederwerrn (DE); Schleuter, Horst, 46562 Voerde (DE); Winter, Heinrich, 97422 Schweinfurt (DE)
(74) Vertreter: Glanz, Werner

(57) **Zusammenfassung**

Bei einer im Zinkbad gelagerten Rolle 1 sind Wälzlager mit zwei übereinander angeordneten Wälzkörperreihen 11 vorgesehen. Dadurch wird der Verschleiß auf eine größere Laufbahnoberfläche verteilt und die Relativdrehzahlen reduziert. Eine erhöhte Lebensdauer ist damit erreichbar.

## Beschreibung

Durch das DE 93 01 764 ist es bereits bekannt, ein Kugellager mit Laufringen aus hitzebeständigem Stahl und Keramikkugeln für die Lagerung von Umlenkrollen in geschmolzenem Metall zu verwenden. Bei solchen Anwendungsfällen ist beispielsweise ein Bottich mit geschmolzenem Zink für die Verzinkung einer durchlaufenden Blechbahn vorgesehen. Diese wird über eine im mehr als 400 Grad Celsius heißen Zinkbad angeordnete Rolle umgeleitet. Sie ist an einem Gestellrahmen aufgehängt und über die genannten Kugellager an den Wellenenden drehbar gelagert. Das aggressive, geschmolzene Zinkbad umspült praktisch das gesamte Lager, da eine zuverlässige Abdichtung bei dieser Temperatur und diesem Medium nicht möglich ist. Dabei ergibt sich ein nicht zu vermeidender Verschleiß insbesondere an den Laufbahnen der Laufringe aus Stahl. Die Verwendung von Keramiktwerkstoffen auch für die Laufringe scheidet meist aus, da mit hohen Kosten und insbesondere mit Zerstörung des stark bruchgefährdeten, spröden Keramikwerkstoffes gerechnet werden muß. Aus diesen Gründen bildet die Konstruktion hitzebeständiger Stahllaufringe und Keramikkugeln noch die optimale Lösung. Jedoch steht bei dieser stets der Wunsch nach einer Verlängerung der Lebensdauer im Vordergrund.

Aufgabe der Erfindung ist es, das Wälzlager der eingangs genannten Art so zu verbessern, daß im Sinne einer längeren Lebensdauer der Verschleiß, insbesondere an den Laufringen reduziert wird.

Die Aufgabe wird gelöst durch ein Wälzlager mit mehreren konzentrisch angeordneten Wälzkörperreihen.

Werden bei dieser Lösung nur zwei Wälzkörperreihen übereinander angeordnet, kann mit einer Aufteilung des Verschleißes gerechnet werden. Da sich die Relativ-Geschwindigkeiten der Wälzkörper gegenüber den Laufbahnen halbieren, kann theoretisch auch mit einer Halbierung des Verschleißes gerechnet werden. Weiterhin ist das Verschleißvolumen des Laufringmaterials angenähert doppelt so hoch, so daß nochmals mit einer Verlängerung der Lebensdauer zu rechnen ist.

Die erfindungsgemäße Lösung bewirkt vorteilhafterweise insgesamt eine Verlängerung der Lebensdauer. Zwar ist der Aufwand durch das nunmehr zweireihige Wälzlager höher, die Gesamtkosten sind jedoch geringer, da die verlängerte Lebensdauer Stillstand-und Umrüstzeiten der Anlage reduziert.

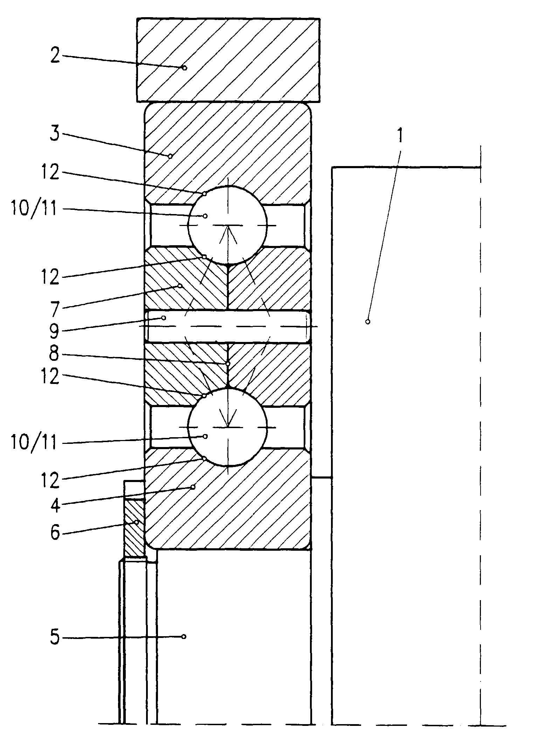

Die Merkmale werden nachfolgend an dem in der Zeichnung dargestellten Beispiel beschrieben.

Die einzige Figur zeigt ein Ende einer Rolle mit einem Dreiringlager.

Die Rolle 1 ist, wie nicht im einzelnen dargestellt, beiderseits mit Dreiringlagern versehen und darüber in einem Tragrahmen 2 drehbar angeordnet. Die gesamte Anordnung arbeitet in einem nicht gezeigten Zinkbad, so daß die Lager mit dem flüssigen Zink umspült sind.

Wahrend der Außenring 3 in einer bekannten Weise im Tragrahmen 2 befestigt ist, ist der Innenring 4 auf dem Wellenzapfen 5 der Rolle 1 aufgesteckt und mittels einer Mutter 6 gesichert. Der Mittelring 7 ist in einer Radialebene 8 geteilt und in der dargestellten Form mittels am Umfang verteilter Bolzen 9 oder dgl. verbunden.

Alle Laufringe 3, 4, 7 sind aus hitzebeständigem Stahl gefertigt. Die Kugeln 10 bestehen aus Keramik. Die Teilung des Mittelringes 7 ist erforderlich, um das vollkugelige Lager zusammenbauen zu können.

Durch die Ausführung mit zwei übereinander angeordneten Kugelreihen 11 dreht sich der Mittelring 7 bei angetriebenem Innenring 4 und stillstehendem Außenring 3 etwa mit der halben Innenringdrehzahl. Die damit halbierten Relativdrehzahlen zwischen den Kugelreihen 11 und den betreffenden Laufringen 3, 4, 7 führt zur Halbierung des Verschleißes an den Laufbahnen 12 der Laufringe 3, 4, 7. Da gleichzeitig durch die Verdoppelung der beanspruchten Laufbahnoberfläche auch ein doppeltes Verschleißvolumen des Laufringmaterials vorliegt, ist insgesamt eine theoretisch vierfache Lebensdauer zu erwarten. Anders ausgedrückt: Die Laufdauer bis zu einer festgesetzten Grenze der Laufgenauigkeit vervierfacht sich durch diese Anordnung gegenüber einer einreihigen Lagerausführung.

Durch die enge Schmiegung der Laufbahnen 12 der Laufringe 3, 4, 7 zu den Kugeln 10 ist die Rolle 1 radial und axial geführt. Die Laufbahnen 12 der Mittelringe 7 sind jeweils in Zweipunktkontakt ausgeführt.

## Patentansprüche

1. Wälzlager für Rollen in Schmelzmetallbädern mit temperaturfesten Laufringen und Wälzkörpern, gekennzeichnet durch ein Wälzlager mit mehreren konzentrisch angeordneten Wälzkörperreihen (11).

2. Wälzlager nach Anspruch 1, gekennzeichnet durch ein Dreiringlager (3, 4, 7).

3. Wälzlager nach Anspruch 1 oder 2, gekennzeichnet durch einen in einer Radialebene (8) geteilten und durch Verbindungselemente (9) gesicherten Mittelring (7).

4. Walzlager nach einem der vorangehenden Ansprüche, gekennzeichnet durch einen Mittelring (7) für Kugeln (10) mit Laufbahnen (12) in Zweipunkttechnik.

5. Wälzlager nach einem der vorangehenden Ansprüche, gekennzeichnet durch Laufringe (3, 4, 7) aus hitzebeständigem Stahl und Wälzkörper (10) aus Keramik.
